# EUROPEAN PATENT SPECIFICATION

(11) **EP 0 340 193 B1**
(45) Date of publication and mention of the grant of the patent: **20.07.1994**
(21) Application number: 89850133.3
(22) Date of filing: 26.04.1989
(51) Int. Cl.: D21G 1/02, F16C 13/00

(54) **Roll adjustable in zones**
Zonenweiseeinstellbare Walze
Rouleau réglable en zônes

(30) Priority: 27.04.1988 FI 881975
(43) Date of publication of application: 02.11.1989
(73) Proprietor: VALMET PAPER MACHINERY INC., 00130 Helsinki (FI)
(72) Inventor: Niskanen, Juhani, SF-90460 Oulunsalo (FI); Pullinen, Martti, SF-40700 Jyväskylä (FI)
(74) Representative: Wallin, Bo-Göran

(56) References cited:
- EP-A- 0 141 141
- EP-A- 0 258 478
- DE-A- 3 525 950
- DE-A- 3 637 108

## Description

The invention concerns a roll adjustable in zones, comprising a stationary roll axle, around which the roll mantle is arranged revolving, the deflection of said roll mantle being regulated by means of glide shoes supported on the roll axle and acting upon the inner face of the roll mantle in the direction of pressing of the roll, said glide shoes being loaded by means of a loading produced by pressure fluid by means of pistons placed in cylinder bores in the central axle underneath the glide shoes.

In a paper machine, rolls are commonly used that form a dewatering press nip, a smoothing nip, or a calendering nip together with the counter-roll. In these applications it is important that the distribution of the linear load in the nip, i.e. the profile, in the axial direction of the rolls can be made invariable or that this profile can be adjusted as desired, e.g. so as to control the transverse moisture profile and/or thickness profile (caliper) of the web. For this purpose, in prior art, various adjustable-crown rolls for paper machines or paper finishing equipment are known, for which said rolls different designations are used, such as variable-crown roll, roll adjustable in zones, and equivalent. As a rule, these rolls comprise a massive or tubular, stationary roll axle and a roll mantle arranged as revolving around said axle. Between said axle and the mantle, arrangements of glide shoes and/or a chamber of pressure fluid or a series of chambers, acting upon the inner face of the mantle, are arranged so that the axial profile of the mantle at the nip can be aligned or adjusted as desired.

In the prior-art rolls adjustable in zones, see for example EP-A-0 141 141, there are several individual glide shoes that load the inner face of the mantle in the direction of the nip. As a rule, each glide shoe is loaded by one loading piston. When individual, separate glide shoes are used, a drawback is the relatively high consumption of power, which is caused by the high flow resistance produced by the relatively wide lateral ridges on the shoes. The power consumption is also increased by the fact that some of the fluid circulating on the inner face of the roll runs away via the lateral edges of the glide shoe.

In some prior-art rolls adjustable in zones, the glide shoe has been made longer, in which case it is loaded by several loading pistons. However, the joining together of two or more glide shoes eliminates the advantage of positioning of an individual shoe. In other words, the glide shoes cannot be positioned freely between the mantle and the flexible, non-revolving central axle so that the pressures present in its various chambers could balance the glide shoe.

An object of the present invention is to avoid the drawbacks that came out above. The main object of the present invention is to provide a roll adjustable in zones whose power requirement is considerably lower than in the prior-art solutions, because adjoining shoes are sealed relative one another, whereby the fluid cannot flow out of the shoes through the sides and because, in such a case, the lateral ridges on the glide shoes can be made narrow. Moreover, by means of the solution in accordance with the invention, the advantage of positioning of an individual shoe is obtained, because the glide shoes can become positioned freely between the mantle and the flexible non-revolving central axle like ordinary separate glide shoes.

In view of achieving the objectives stated above and those that will come out later, the solution in accordance with the invention is mainly characterized in that adjoining glide shoes are, at least in pairs, sealed relative to each other, being displaceable in the radial direction of the roll, so that flow of fluid between the glide shoes and the inner face of the roll mantle is substantially prevented over the lateral ridges on the glide shoes sealed relative to each other.

Further advantageous characteristic features of the invention are disclosed in claims 2 to 6.

In the following, the invention will be described in detail with reference to some preferred exemplifying embodiments of the invention illustrated in the figures in the attached drawing, the invention being by no means strictly confined to the details of said embodiments.

Figure 1 is a schematical and partial axial vertical sectional view of a roll adjustable in zones.

Figure 2 is a schematical illustration of the glide shoes of a roll in accordance with the invention as viewed from the direction of the mantle.

Figures 3A to 3I are schematical illustrations of different alternatives of sealing of the glide shoes in accordance with the invention.

Figures 4A and 4B are schematical illustrations of different suggested applications for lateral articulated joints between glide shoes.

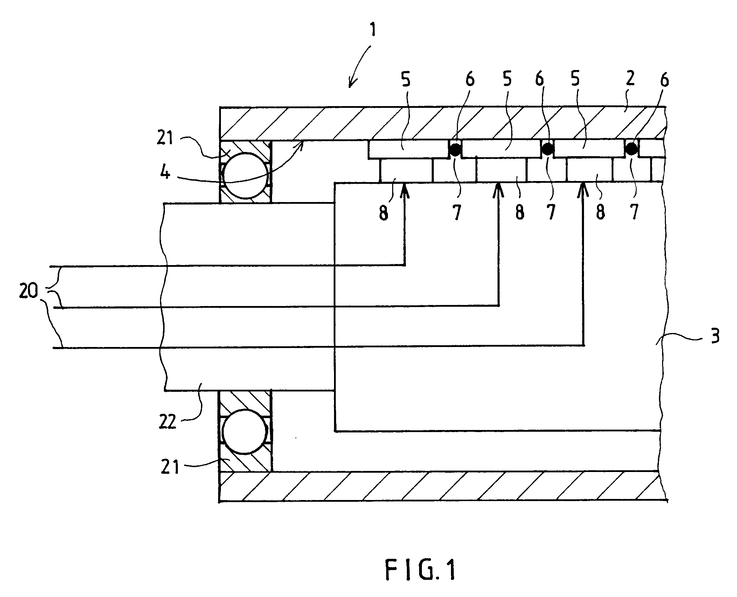

In Fig. 1, the variable-crown roll is denoted generally with the reference numeral 1. The variable-crown roll 1 comprises a massive central axle 3 and a roll mantle 2 arranged revolving on said axle. The roll mantle 2 is supported on the end portions 22 of the central axle 3 by means of bearings 21. Between the central axle 3 and the roll mantle 2, glide shoes 5 are fitted, which act upon the inner face 4 of the mantle 1 and which are loaded by means of pistons 8, which are placed in cylinder bores (not shown in the figure) in the axle 3. The fluid that circulates between the glide shoes 5 and the inner face 4 of the roll mantle is passed along fluid ducts 20 into the fluid ducts in the pistons 8, out of which the fluid is passed through the pockets provided on the glide shoes 5 onto the inner face 4 of the roll mantle. The glide shoes 5 are sealed relative to one another at their side faces by means of seals 6 so that the glide shoes 5 can move relative to one another in the radial direction of the roll 1. A seal 6 is placed in the gap 7 between each of the adjoining glide shoes 5.

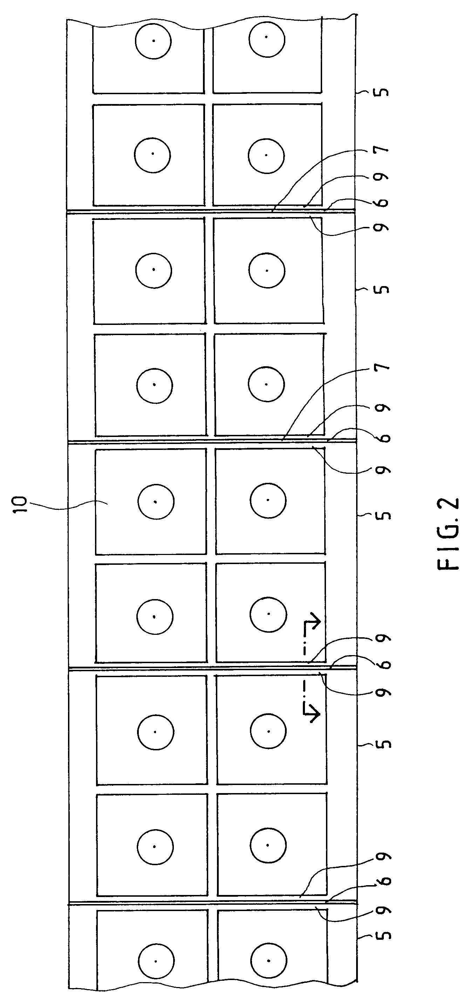

As is shown in Fig. 2, each glide shoe 5 comprises pockets 10, out of which the fluid is passed onto the inner face 4 of the roll mantle 2. A seal 6 is fitted in the gap 7 between each of the adjoining glide shoes 5, which said seal prevents flow of the fluid in the lateral direction over the lateral ridges 9. Thus, it is possible to make the lateral ridges 9 on the glide shoes 5 narrow.

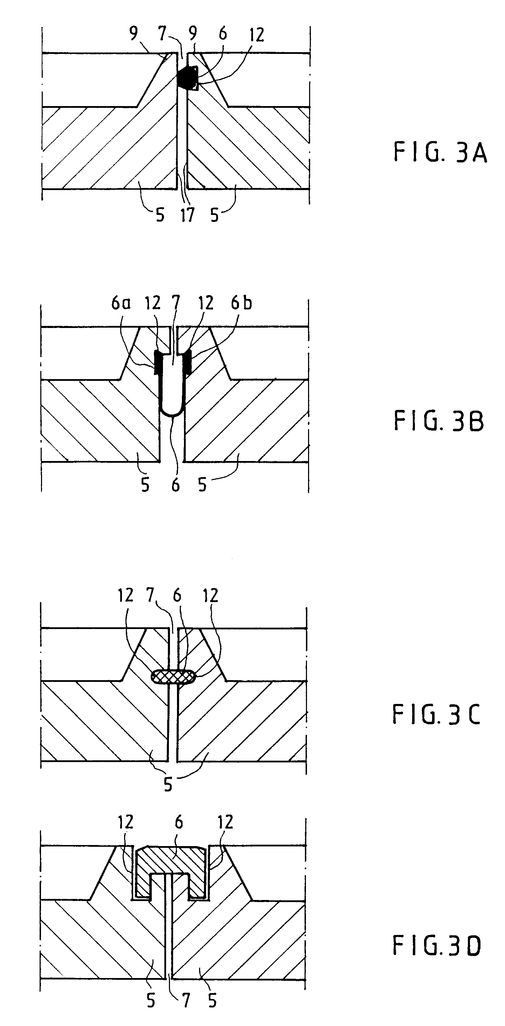

Figures 3A to 3I are sectional views A-A through Fig. 2.

According to Fig. 3A, the seal 6 can be fitted into the gap 7 between the glide shoes 5 so that it is attached to a groove 12 that has been made into the side face 17 of one of the glide shoes 5. The glide shoes 5 can move relative one another in the radial direction of the roll 1, whereby the seal 6 glides along the side face 17 of the other glide shoe 5.

According to the solution shown in Fig. 3B, the seal 6 can be fixed in the gap 7 between the glide shoes 5 so that the ends 6a,6b of the seal 6 are attached to the grooves 12 made into the glide shoes 5. The seal 6 is resilient and bellows-like, so that the glide shoes can move relative one another in the radial direction of the roll 1.

According to Fig. 3C, the seal 6 can be fixed to the gap 7 between the glide shoes so that a band-like, resilient and elastic seal 6 is attached by its edges to the grooves 12 made into the glide shoes 5.

According to Fig. 3D, the sides of the glide shoes 5 placed facing the roll mantle can be provided with grooves 12, into which the seal 6 is placed so that it passes from one groove into the other and covers the gap 7 between the glide shoes 5. In the exemplifying embodiment in accordance with this figure, the seal 6 can move relative to the glide shoes 5.

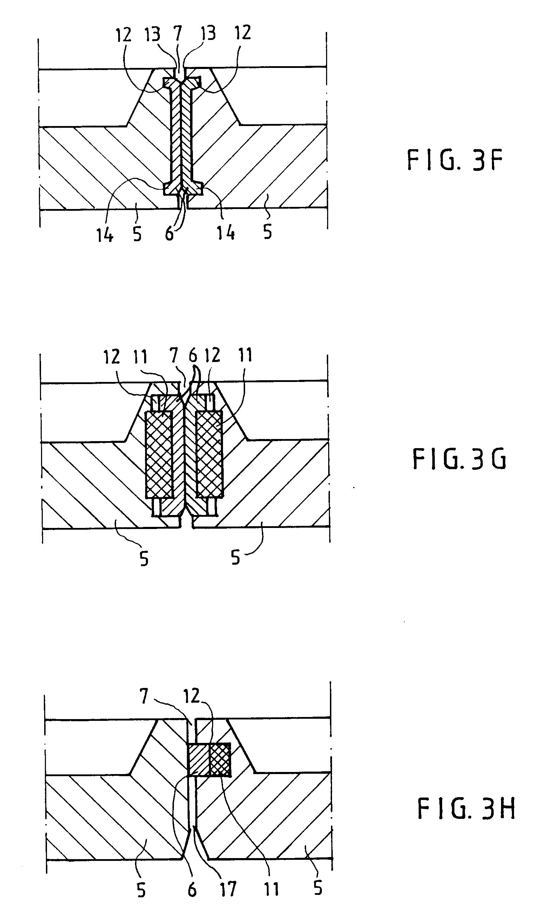

According to Fig. 3F, fastening grooves 12 and 14 are made into the edges 13 of each of the adjoining glide shoes 5, the seals 6 being attached to said grooves 12 and 14. The seals 6 are pressed against one another in the gap 7 between the glide shoes 5. The sealing face between the seals 16 is large, and the seals 6 glide against each other, so that the friction between the seals 6 must be low. In such a case, for the seal material preferably such a material is chosen whose friction coefficient is low, e.g. teflon.

According to Fig. 3G, the seals 6 can be attached to the gap 7 between the glide shoes 5 so that resilient bases 11 are used as an aid, which said bases are attached to the grooves 12 made into the glide shoes 5. The seals 6 are attached to these resilient bases 11 so that they are pressed against one another in the gap 7 between the glide shoes 5. The seals 6 glide against one another, and the sealing face between them is large, so that the seals 6 are preferably made of a material whose friction coefficient is low, e.g. teflon.

Fig. 3H shows one mode of sealing in accordance with the invention, wherein the seal 6 is attached by means of a resilient base 11 to the groove 12 made into the glide shoe 5 so that the seal 6 is attached to one of the adjoining glide shoes 5 only, while the resilient base 11 acts as a spring, which presses the seal 6 against the side face 17 of the adjoining glide shoe 5. Most appropriately, the sealing material may be, e.g., of teflon or of some other, corresponding material.

According to Fig. 3I seals 6 are attached to each of the glide shoes 5 so that they are pressed against one another in the gap 7 between the glide shoes 5.

The solutions for the sealing of the glide shoes 5 illustrated in Figs. 3Q and 3H are asymmetric in respect of their construction as the seal 6 is placed in the side face of one of the glide shoes 5 only. The glide-shoe 5 sealing solutions illustrated in Figs. 3B to 3G and in 3I are symmetric, as the seals 6 are placed in the side faces of both of the glide shoes 5. Each of the suggested solutions for the sealing of the glide shoes 5 permits gliding of the glide shoes 5 relative one another in the radial direction of the roll 1. In each solution in accordance with the invention, the seal 6 prevents flow of fluid in the lateral direction over the lateral ridges on the glide shoes 5. Moreover, the seal 6 permits manufacture of narrower lateral ridges 9 for the glide shoes 5.

Pressurized fluid flows between the glide shoes 5 and the roll mantle 2, which said fluid attempts to penetrate into the gap 7 between the glide shoes 5 and to open the sealing 6. This separation of the glide shoes 5 from one another can be prevented by binding the glide shoes 5 together by means of articulated joints in the lateral direction. The articulation, however, permits movements of the glide shoes 5 relative one another in the radial direction of the roll 1.

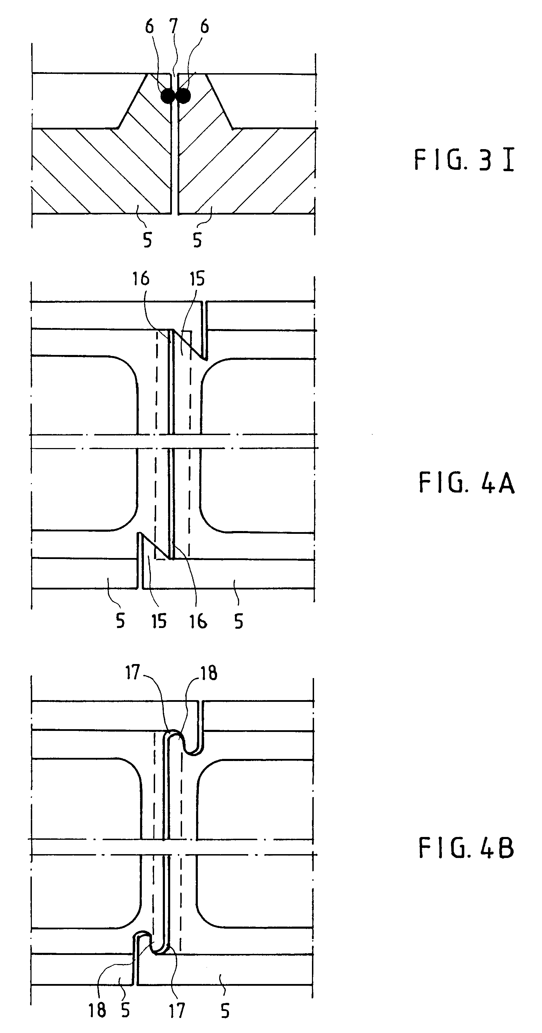

Fig. 4A shows an example of a lateral articulated joint between the glide shoes 5. At the edge of each glide shoe 5, half a dovetail groove 16 and half a dovetail projection 15 are formed, which are fitted correspondingly to the corresponding dovetail groove 16 and dovetail projection 15 on the adjoining glide shoe. The dovetail-groove/dovetail-projection fitting is arranged on the glide shoes 5 so that a gap remains between the glide shoes which permits gliding of the glide shoes 5 relative one another in the radial plane of the roll 1. The articulated joint, however, prevents separation of the glide shoes from each other in the axial direction of the roll 1.

Fig. 4B shows a corresponding example of a lateral articulated joint between the glide shoes 5, wherein a groove 17 and a corresponding projection 18 are made to the edge of the glide shoe 5, which said groove and projection are attached to the corresponding groove 18 and projection 17 on the adjoining glide shoe 5. The groove/projection fitting is arranged on the glide shoes 5 so that the glide shoes 5 can glide relative one another in the radial direction of the roll 11, but separation of the glide shoes from each other in the axial direction of the roll 1 is excluded.

Above, the invention has been described by way of example with reference to the figures in the accompanying drawing. This is, however, not supposed to confine the invention to the exemplifying embodiments illustrated in the figures alone, but many variations are possible within the scope of the inventive idea defined in the following patent claims.

## Claims

1. Roll (1) adjustable in zones, comprising a stationary roll axle (3), around which the roll mantle (2) is arranged revolving, the deflection of said roll mantle being regulated by means of glide shoes (5) supported on the roll axle (3) and acting upon the inner face (4) of the roll mantle (2) in the direction of pressing of the roll (1), said glide shoes being loaded by means of a loading produced by pressure fluid by means of pistons (8) placed in cylinder bores in the central axle (3) underneath the glide shoes (5), **characterized** in that adjoining glide shoes (5) are, at least in pairs, sealed (6) relative to each other, being displaceable in the radial direction of the roll (1), so that flow of fluid between the glide shoes (5) and the inner face (4) of the roll mantle (2) is substantially prevented over the lateral ridges (9) on the glide shoes (5) sealed (6) relative to each other.

2. Roll as claimed in claim 1, **characterized** in that adjoining glide shoes (5) are sealed (6) over the entire length of the roll (1).

3. Roll as claimed in claim 1 or 2, **characterized** in that adjoining glide shoes (5), which are sealed relative to one another, are provided with articulated joints relative to one another so that movements of the glide shoes (5) relative to one another in the radial direction of the roll (1) are permitted, but opening of the seal (6) in the axial direction of the roll (1) is prevented.

4. Roll as claimed in any of the claims 1 to 3, **characterized** in that the seal (6) is attached to one of the adjoining glide shoes (5) only, whereas the other edge of the seal (6) glides along the lateral edge (17) of the other glide shoe (5).

5. Roll as claimed in any of the claims 1 to 3, **characterized** in that a seal (6) is attached to each of the adjoining glide shoes (5), which said seals (6) glide against each other.

6. Roll as claimed in any of the claims 1 to 5, **characterized** in that the seal (6) is loaded by means of a resilient base (11) attached to the glide shoe (5).

## Patentansprüche

1. In Zonen einstellbare Walze (1), mit
einer stationären Walzenachse (3), um die der Walzenmantel (2) drehbar angeordnet ist, wobei die Durchbiegung des Walzenmantels durch Gleitschuhe (5) geregelt ist, die auf der Walzenachse (3) abgestützt sind und auf die Innenfläche (4) des Walzenmantels (2) in Druckrichtung der Walze (1) wirken, wobei die Gleitschuhe durch einen Druck vorgespannt sind, welcher über ein Druckfluid mittels Kolben (8) aufgebracht wird, die in Zylinderbohrungen in der zentralen Achse (3) unterhalb der Gleitschuhe (5) angeordnet sind,
dadurch **gekennzeichnet,**
daß angrenzende Gleitschuhe (5) zumindest paarweise gegeneinander abgedichtet (6) sind, wobei sie in radialer Richtung der Walze (1) verschiebbar sind, so daß der Fluidfluß zwischen den Gleitschuhen (5) und der Innenfläche (4) des Walzenmantels (2) über die seitlichen Stege (9) auf den gegeneinander abgedichteten (6) Gleitschuhen (5) im wesentlichen verhindert wird.

2. Walze nach Anspruch 1,
dadurch **gekennzeichnet,**
daß angrenzende Gleitschuhe (5) über die gesamte Länge der Walze (1) abgedichtet (6) sind.

3. Walze nach Anspruch 1 oder 2,
dadurch **gekennzeichnet,**
daß die gegeneinander abgedichteten angrenzenden Gleitschuhe (5) über Gelenkverbindungen miteinander verbunden sind, so daß Bewegungen der Gleitschuhe (5) in radialer Richtung der Walze (1) relativ zueinander möglich sind, eine Öffnung der Dichtung (6) in axialer Richtung der Walze (1) jedoch verhindert wird.

4. Walze nach einem der Ansprüche 1 bis 3,
dadurch **gekennzeichnet,**
daß die Dichtung (6) nur an einem der angrenzenden Gleitschuhe (5) angebracht ist, wohingegen die andere Kante der Dichtung (6) an der seitlichen Kante (17) des anderen Gleitschuhs (5) entlanggleitet.

5. Walze nach einem der Ansprüche 1 bis 3,
dadurch **gekennzeichnet,**
daß eine Dichtung (6) an jedem der angrenzenden Gleitschuhe (5) angebracht ist, welche Dichtungen (6) aneinander gleiten.

6. Walze nach einem der Ansprüche 1 bis 5,
dadurch **gekennzeichnet,**
daß die Dichtung (6) durch eine federnde Basis (11) vorgespannt ist, die an dem Gleitschuh (5) angebracht ist.

## Revendications

1. Rouleau (1) réglable par zones, comprenant un axe stationnaire (3) autour duquel est montée de façon rotative l'enveloppe (2) du rouleau, la déflexion de ladite enveloppe du rouleau étant régulée au moyen de patins de glissement (5) supportés sur l'axe (3) du rouleau et agissant sur la face interne (4) de l'enveloppe (2) du rouleau dans la direction de la pression du rouleau (1), lesdits patins de glissement (5) étant chargés au moyen d'une charge produite par un fluide sous pression par des pistons (8) placés dans des alésages cylindriques de l'axe central (3) au-dessous des patins de glissement (5), caractérisé en ce que les patins de glissement voisins (5) sont reliés de façon étanche (en 6) les uns avec les autres au moins par paires et peuvent être déplacés dans la direction radiale du rouleau (1) de manière que l'écoulement du fluide entre les patins de glissement (5) et la face interne (4) de l'enveloppe (2) du rouleau soit rendu pratiquement impossible pardessus les nervures latérales (9) des patins de glissement (5) qui sont reliés de façon étanche (en 6) les uns aux autres.

2. Rouleau selon la revendication 1, caractérisé en ce que les patins de glissement voisins (5) sont reliés de façon étanche (en 6) sur la totalité de la longueur du rouleau (1).

3. Rouleau selon la revendication 1 ou 2, caractérisé en ce que les patins de glissement voisins (5), qui sont reliés de façon étanche les uns aux autres, sont munis de joints articulés de manière que des mouvements des patins de glissement (5) les uns par rapport aux autres dans la direction radiale du rouleau (1) soient permis mais que l'ouverture du joint (6) dans la direction axiale du rouleau (1) soit rendue impossible.

4. Rouleau selon l'une quelconque des revendications 1 à 3, caractérisé en ce que le joint (6) est fixé seulement à l'un des patins de glissement voisins (5), alors que l'autre bord du joint (6) glisse le long du bord latéral (17) de l'autre patin de glissement (5).

5. Rouleau selon l'une quelconque des revendications 1 à 3, caractérisé en ce qu'un joint (6) est fixé à chacun des patins de glissement voisins (5), lesquels joints (6) glissent l'un contre l'autre.

6. Rouleau selon l'une quelconque des revendications 1 à 5, caractérisé en ce que le joint (6) est chargé au moyen d'une base élastique (11) fixée au patin de glissement (5).
